# EUROPEAN PATENT APPLICATION

(11) **EP 4 660 660 A1**
(43) Date of publication of application: **10.12.2025**
(21) Application number: 24179823.0
(22) Date of filing: 04.06.2024
(51) Int. Cl.: G01S 7/02, G01S 13/04, G01S 13/88, H01Q 1/52, H01Q 1/42, H01Q 17/00, A47K 13/10

(54) **RADAR DEVICE AND TOILET COMPRISING THE SAME**

(71) Applicant: Infineon Technologies AG, 85579 Neubiberg (DE)
(72) Inventor: CHAN, Chun Hei, 999077 Hong Kong (HK); LEUNG, Tsz Shing, 999077 Hong Kong (HK); YUEN, Tsz Chung, 999077 Hong Kong (HK); LEUNG, Kwok Shun, 9990077 Hong Kong (HK)
(74) Representative: 2SPL Patentanwälte PartG mbB

(57) **Abstract**

Provided is a radar device (100,200,300) arranged to be included in a toilet (400). The radar device includes a housing (110) configured to attenuate radar waves originating from within and/or outside the housing and impinging thereupon. The housing includes an opening (111) formed to be covered by a casing of the toilet in a mounting position of the radar device. In addition, the radar device includes a radar sensor (120) arranged in the housing. A field-of-view of the radar sensor extends through the opening.

## Description

### Field

The present disclosure relates to radar for toilets. In particular, examples of the present disclosure relate to a radar device arranged to be included in a toilet, and a toilet comprising such a radar device.

### Background

Radar is used for toilets to provide various smart toilet functionalities. Conventional toilet casing structures are complicated and interfere with the radar signals. For example, multiple layers of the casing structure may distort the radar signals. Moreover, the distortion may depend on whether the toilet lid is opened or closed. Furthermore, metallic components with reflective metal structures such as water pumps, mechanical part or motors of the toilet may interfere with the radar signals.

Hence, there may be a demand for improved radar for toilets.

### Summary

This demand is met by the subject-matter of the independent claims. Advantageous embodiments are addressed by the dependent claims.

According to a first aspect, the present disclosure provides a radar device arranged to be included in a toilet. The radar device comprises a housing configured to attenuate radar waves originating from within and/or outside the housing and impinging thereupon. The housing comprises an opening formed to be covered by a casing of the toilet in a mounting position of the radar device. In addition, the radar device comprises a radar sensor arranged in the housing. A Field-of-View (FoV) of the radar sensor extends through the opening of the housing.

According to a second aspect, the present disclosure provides a toilet comprising a radar device according to the first aspect. The toilet further comprises processing circuitry configured to control one or more functions of the toilet based on radar data output by the radar sensor of the radar device. In addition, the toilet comprises a casing. The opening of the radar device housing is covered by the casing of the toilet.

### Brief description of the Figures

Some examples of apparatuses and/or methods will be described in the following by way of example only, and with reference to the accompanying figures, in which
Fig. 1 illustrates a first example of a radar device;
Fig. 2 illustrates a second example of a radar device;
Fig. 3 illustrates a third example of a radar device; and
Fig. 4 illustrates an example of a toilet.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

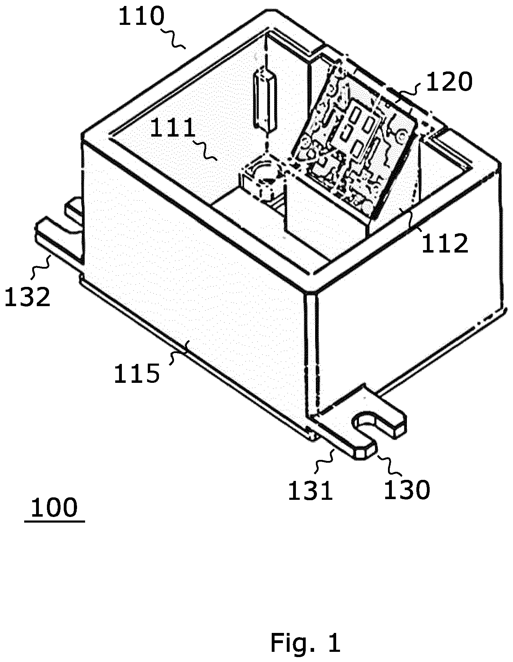

**Fig. 1** illustrates a radar device 100 arranged to be included in a toilet. In other words, the radar device 100 is destined to be part of a toilet.

The radar device 100 comprises a housing (casing, enclosure) 110 configured to attenuate radar waves originating from within and/or outside the housing 110 and impinging thereupon. In other words, the housing 110 is designed or adapted to reduce the strength or intensity of radar waves that come into contact with the housing 110 and that are generated or emitted from one or more sources inside the housing 110, outside the housing 110 or both. Attenuation here refers to the weakening or damping of the radar waves.

The housing 110 may be a standalone housing destined to be mounted in a toilet, as illustrated in Fig. 1. However, alternatively, and as described further, the housing 110 may be configured as an integral part of a toilet.

The housing 110 comprises outer walls 115 and an opening (gap, hole, window) 111. The outer walls 115 define an inner space (volume, enclosure) of the housing 110 therebetween. The opening 111 is formed to be covered by a casing, such as an outer casing, of the toilet in a mounting position of the radar device 110. In other words, the opening is designed or shaped in a way that allows it to be concealed or hidden by the casing of the toilet when the radar device 100 is mounted to the toilet. For example, the opening 111 may be formed in a top face of the housing 110 in the mounting position of the radar device 100. The outer casing of the toilet refers to an external covering or shell that surrounds the inner components of the toilet. It may amount to the visible part of the toilet that one sees when looking at it from the outside. The outer casing of the toilet is not covered by any other material of the toilet. The mounting position of the radar device 100 is the specific location and orientation in which the radar device 100 is mounted to the toilet.

In the example of Fig. 1, the housing 110 is shaped as cuboid and the opening 111 is formed as a rectangular cutout in one of the faces of the cuboid such that the opening 111 is formed in the top face of the cuboid in the mounting position of the radar device 100. However, the present disclosure is not limited thereto. The housing 110 may exhibit any arbitrary shape. For example, the housing 110 may be shaped as any other type of polyhedron or semi-sphere. The opening 111 may be formed in one or multiple surfaces of the polyhedron. In some examples, the housing 110 may exhibit one or more curved (bent) faces instead of the planar faces illustrated in Fig. 1. Alternatively or additionally, the housing 110 may exhibit one or more irregular faces. According to examples, the housing may comprise only nonplanar faces. Similarly to the housing 110, the opening 111 may exhibit any shape such as a rectangular shape, an elliptic shape, an irregular shape, etc. In addition, irrespective of whether the faces are planar or not, the opening 111 may only extend over part of such faces. For instance, the opening 111 in the configuration of Fig. 1 1 may only stretch over part of the top face of the housing 111 and thus may present itself as a hole in the material of the top face of the housing 111.

The radar device 100 comprises a radar sensor 120. The radar sensor 120 may use any type of radar operation principle. For example, radar sensor 120 may use pulsed radar, Continuous Wave (CW) radar such as Frequency-Modulated Continuous Wave (FMCW) radar or Doppler radar. According to examples, the radar sensor 120 may be an FMCW radar sensor. An operating frequency of the radar sensor 120 may, e.g., be at least 300 MHz and at maximum 300 GHz. In other words, a carrier frequency of the radar signal(s) emitted by the radar sensor 120 may be at least 300 MHz and at maximum 300 GHz. For example, the operating frequency may be 24 GHz, 60 GHz or 77 GHz. The radar sensor 120 comprises transmit circuitry configured to generate one or more transmit radar signals for transmission to the environment. Additionally, the radar sensor 120 comprises receive circuitry configured to process one or more received reflections of the one or more emitted transmit radar signals.

The radar sensor 120 comprises one or more antennas for transmitting the transmit radar signals and receiving the one or more reflections. The antennas may be co-located at the same physical location or be located separate from each other at different locations. In other words, the radar sensor 120 may be a monostatic radar sensor or a bistatic radar sensor. In alternative examples, at least part of the antennas (e.g., all antennas) may be external to the radar sensor 120 (i.e., not be part of the radar sensor 120). For example, the external antenna(s) may be one or more metal structures formed on or extending from a Printed Circuit Board (PCB) separate from the radar sensor 120. The radar sensor 120 may be a semiconductor device.

The radar sensor 120 is arranged in (within) the housing 110. The radar sensor 120 is arranged such in the housing 110 that a FoV of the radar sensor 120 extends through the opening 111. The FoV of the radar sensor 120 denotes the spatial area or angular range within which the radar sensor 120 can detect objects or phenomena. In other words, the FoV of the radar sensor 120 describes the region in space that the radar sensor 120 can "see" or sense. In the example of Fig. 1, the radar sensor 120 is arranged on a tilted platform or mounting space 112 of the housing such that the FoV of the radar sensor 120 extends through the opening 111. The mounting space 112 is for instance part of or affixed to one of the outer walls 115 of the housing 110. However, it is to be noted that the present disclosure is not limited thereto. Depending on the geometry (shape) of the housing 110 and/or the mounting position of the radar device 100, the arrangement and configuration of the mounting space for the radar sensor 120 within the housing 110 may vary.

The opening 111 is formed to be covered by the (e.g., outer) casing of the toilet in the mounting position of the radar device 110. In case the casing in an outer casing of the toilet, the FoV of the radar sensor 120 extends through the opening 111 such that only the outer casing of the toilet interferes with the radar signals emitted/received by the radar sensor 120. Compared to conventional set-ups, this may allow to minimize interference of the radar signals emitted/received by the radar sensor 120 with other components of the toilet. In particular, interference of the radar signals emitted/received by the radar sensor 120 with metallic components with reflective metal structures such as water pumps, mechanical part or motors of the toilet may be avoided. Furthermore, as the housing 110 is configured to attenuate radar waves impinging thereupon and originating from within and/or outside the housing 110, emission/reception of radar signals into/from undesired (non-targeted) spatial areas or regions in space may be avoided. In other words, the radar sensor 120 "sees" or senses the space outside the housing 110 only through the opening 111.

In examples, in which the housing 110 is a standalone housing, the radar device 100 may further comprise a mounting structure (element, mechanism) 130 for mounting the housing 110 to a receiving structure of the toilet. The mounting structure 130 is a structure, element or mechanism adapted for attaching or securing the housing 110 to another structure such as the receiving structure of the toilet. The receiving structure is a part of the toilet and the counterpart of the mounting structure 130. In other words, the receiving structure specifies the part of the toilet to which the radar device 100 is mounted (mountable) to via the mounting structure 130. In the example of Fig. 1, the mounting structure 130 includes two attachment elements (structures) 131, 132 protruding outwardly from outer walls 115 of the housing 110. Each attachment element 131, 132 exhibits a respective recess that allow the radar device 100 to be fastened to the corresponding receiving structure of the toilet (e.g., by screwing). However, the present disclosure is not limited to the type of mounting structure 130 illustrated in Fig. 1. In alternative examples, different types of mounting structures may be used instead. For example, one or more clips, one or more hooks, or one or more clamps may be used instead for the mounting structure 130.

The mounting structures described in the foregoing allow to detachably mount the radar device 100 to the receiving structure of the toilet. However, as previously indicated, the present disclosure is not limited thereto. In other examples, the mounting structure 130 may be arranged for permanently mounting the radar device 100 to the receiving structure of the toilet.

The radar device 100, in particular the housing 110, may be a separate device that can be mounted to a toilet via the mounting structure 130. In other examples, the radar device 100, in particular the housing 110, may be an integral part of the toilet's outer casing or of an internal structure of the toilet which is facing the outer casing. According to examples, the housing may be formed integrally with the corresponding receiving structure of the toilet in a molding process. In other examples, the housing 110 may be glued or welded (e.g., by means of plastic welding) to the corresponding structure of the toilet. In case the housing is part of the outer casing, the opening 111 may be a closable (sealable) opening in the outer casing of the toilet.

According to examples, the distance between the radar sensor 120 and the opening 111 may be equal to a (i.e., one) wavelength of the radar waves emitted by the radar sensor 120. In case the housing is filled with a gas such as air, it is referred to the wavelength of the radar waves emitted by the radar sensor 120 in the gas. If the housing 110 is filled with material such fire-proof or water-proof material (e.g., epoxy material), it is referred to the wavelength of the radar waves emitted by the radar sensor 120 in the respective material. The distance may, e.g., be measured along the normal direction of the radar sensor 120 (i.e., the direction perpendicular to the surface of the radar sensor 120) between the opening 111 and one of the center of the radar sensor 120, a position of a transmit antenna of the radar sensor 120, or a weighted position of the positions of multiple transmit antennas of the radar sensor 120. Spacing the radar sensor 120 by one wavelength of its emitted radar waves from the opening 111 allows to minimize the distortion of the emitted radar signals by the outer casing of the toilet when the radar device 100 is mounted to the toilet.

For attenuating the radar waves, the housing 110 may comprise Radiation-Absorbent Material (RAM). RAM is a type of material designed to absorb electromagnetic radiation. In particular, the RAM is configured to absorb radar waves emitted by the radar sensor 120 and radar interference generated by components in the toilet from outside the housing 110. For example, the RAM may exhibit an insertion loss of at least 10, 25 or 50 dB per cm material thickness for the radar waves emitted by the radar sensor 120. The RAM may, e.g., be or comprise polypropylene with RF absorbing ingredients such as RF absorbing silicon, or neoprene plastic mixed with RF absorbing ingredients. However, the present disclosure is not limited to the aforementioned examples. Other materials may be used instead or in addition.

According to examples, the RAM may, e.g., at least partially line an inner surface of the housing 110, for instance the outer walls 115. In other words, the material of the housing 110 may comprise non-RAM wall material, wherein an inner surface thereof is at least partially covered or coated with the RAM. The RAM may but need not cover the entire inner surface of the non-RAM wall material. For example, the non-RAM wall material may be plastic.

In alternative examples, the RAM may be integral with the wall material of the housing 110. In other words, the RAM may be an inherent part of the wall material of the housing 110. That is, the wall(s) of the housing 110 may comprise RAM. Forming the wall(s) of the housing 110 from RAM may allow to reduce the manufacturing costs of the radar device 100. In these examples, the (wall) thickness of the wall material may be n + ¼ of the radar waves' wavelength in the wall material (i.e., the radar waves' in-material wavelength measured in the material) with n being an integer equal to or greater than zero. This allows to improve the attenuation of the radar waves by the housing 110.

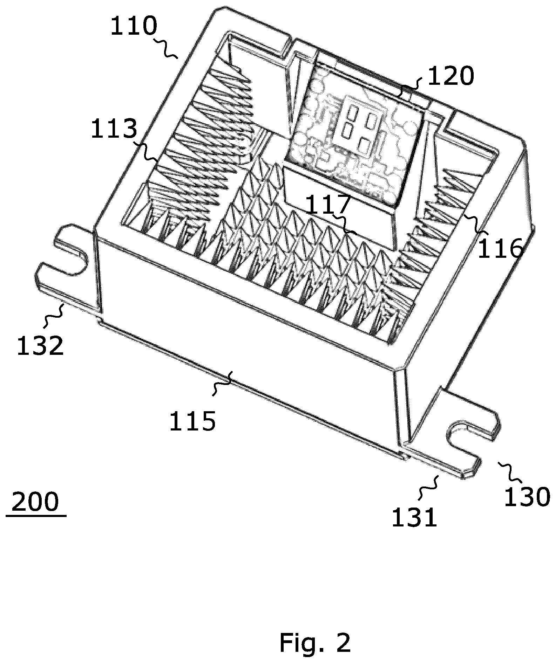

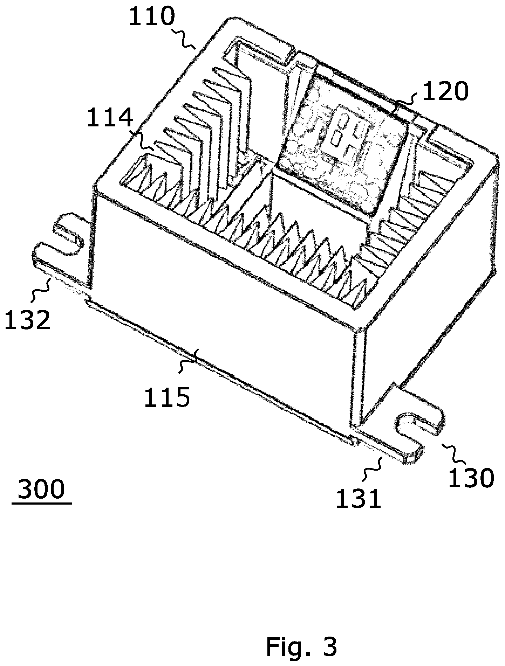

In the example of Fig. 1, the inner surface of the housing 110 is plane, i.e., not structured. However, the present disclosure is not limited thereto. In other examples, the housing 110 may comprise protruding structures formed on the inner surface of the housing 110 and protruding from said inner surface into the housing 110. The protruding structures are configured to cause the radar waves to undergo multiple reflections for attenuating the radar waves. Two exemplary configurations of the protruding structures are illustrated in Fig. 2 and Fig. 3.

**Fig. 2** illustrates another radar device 200. The radar device 200 differs from the radar device 100 in that protruding structures 113 exhibiting a pyramidal configuration are formed on the inner surface of the housing 110 such that they protrude from said inner surface into the housing 110. More specifically, the protruding structures 113 are present on the side wall(s) 116 as well as on the floor 117 of the housing 110. In the example of Fig. 2, the respective base of the pyramidal protrusions is a square. However, it is to be noted that the present disclosure is not limited thereto. In general, the base may be any polygon. In alternative examples, a frustum of pyramid configuration may be used instead of the pyramidal configuration illustrated in Fig. 2 (i.e., the protruding structures may be truncated pyramids rather than full pyramids).

**Fig. 3** illustrates a radar device 300 that differs from the radar devices 100 and 200 in that protruding structures 114 exhibiting a wedge configuration are formed on the inner surface of the housing 110 such that they protrude from said inner surface into the housing 110. In alternative examples, a wedge array configuration may be used instead of the wedge configuration illustrated in Fig. 3 (i.e., the protruding structures may comprise a respective array of two or more wedges rather than a single wedge).

As is evident from the foregoing examples, multiple configurations may be used for the protruding structures. For example, a conic configuration may be used rather than the configurations illustrated in Fig. 2 and Fig. 3 (i.e., the protruding structures may be of conical shape rather than pyramidal or wedge shape). The present disclosure is, however, not limited to the foregoing examples. Other suitable configurations for the protruding structures may be used instead or in addition.

The protruding structures may at least partially be made from RAM.

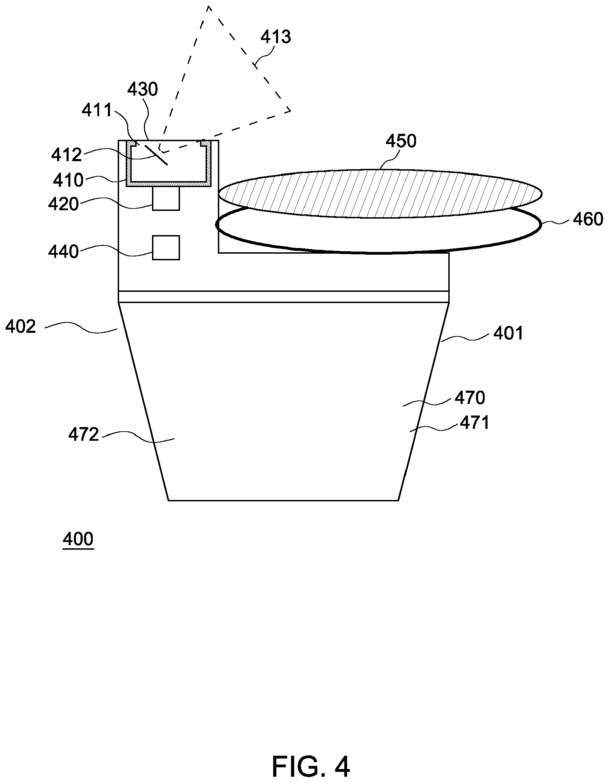

**Fig. 4** schematically illustrates an exemplary toilet 400 comprising a radar device 410 according to the proposed technology. For example, the radar device 410 may be one of the radar devices 100, 200 and 300 described above. As described above, the toilet 400 may comprises a receiving structure 420 to which the radar device 410 is mounted via its mounting structure. As the mounting structure of the radar device 410 and the receiving structure 420 may be manifold (see above), the receiving structure 420 is indicated schematically in Fig. 4. In alternative examples, the housing of the radar device 410 may be an integral part of the toilet 400 (see above). The receiving structure 420 may be omitted in these examples.

The opening 411 of the radar device 410 is covered by only the casing 430 of the toilet 400. As indicated in Fig. 4, the casing 430 may be the outer casing of the toilet 400. The FoV 413 of the radar device 410's radar sensor 412 extends through the opening 411. Accordingly, only the (e.g., outer) casing 430 of the toilet 400 interferes with the radar waves emitted/received by the radar sensor 412. As described above, this may allow to minimize interference of the radar signals emitted/received by the radar sensor 412 with other components of the toilet 400 compared to conventional toilet set-ups.

As indicated in Fig. 4, the FoV 413 of the radar sensor 412 may cover the space in front of the toilet 400 such that people or movements in the area in front of the toilet may be sensed (detected).

The toilet 400 further comprises processing circuitry 440 (electrically) coupled to the radar sensor 412. For example, the processing circuitry 410 may be a single dedicated processor, a single shared processor, or a plurality of individual processors, some of which or all of which may be shared, a digital signal processor (DSP) hardware, an application specific integrated circuit (ASIC), a system-on-a-chip (SoC) a neuromorphic processor or a field programmable gate array (FPGA). The processing circuitry 440 may optionally be coupled to, e.g., memory such as read only memory (ROM) for storing software, random access memory (RAM) and/or non-volatile memory. For example, the toilet 400 may comprise memory configured to store instructions, which when executed by the processing circuitry 440, cause the processing circuitry 440 to perform the steps and methods described herein. The processing circuitry 440 may be arranged outside the radar device 410 (i.e., separate from the radar device 410) as illustrated in Fig. 4. In other examples, the processing circuitry 440 may be arranged within (inside) the housing of the radar device 410.

The processing circuitry 440 is configured to control one or more functions of the toilet 400 based on radar data output by the radar sensor 412 of the radar device 410. For example, the one or more functions of the toilet 400 may comprise one or more of opening and closing of a toilet lid 450 of the toilet 400 and opening and closing of a toilet seat 460 of the toilet 400. For example, at least one of the toilet lid 450 and the toilet seat 460 may be controlled to open if the processing circuitry 440 determines based on the radar data output by the radar sensor 412 that a person is approaching the toilet 400. Similarly, at least one of the toilet lid 450 and the toilet seat 460 may be controlled to close if the processing circuitry 440 determines based on the radar data output by the radar sensor 412 that a person previously using the toilet 400 is moving away from the toilet. Similarly, the one or more functions of the toilet 400 may comprise turning on and off of a heater for the toilet seat 460. However, the present disclosure is not limited to the aforementioned examples. Other functions of the toilet 400 may be controlled instead or in addition by the processing circuitry 440 based on the radar data output by the radar sensor 412 of the radar device 410.

According to examples of the present disclosure, part of the (outer) casing 430 may be detachable from the toilet 400 for accessing (enabling access to) the radar device 410. Accordingly, maintenance or replacement of the radar sensor 412, the housing or other elements of the radar device 410 is enabled.

As described above, the radar device 410 may be detachably mounted to the receiving structure of the toilet 400. Accordingly, the radar device 410 may be removed from the toilet for, e.g., maintenance or replacement.

The toilet 400 may comprise various further elements such as a toilet bowl 470, a water tank, a flush mechanism, etc.

In the example of Fig. 4, the radar device 410 is arranged between the back end 472 of the toilet bowl 470 and the back end 402 of the toilet 400. The back end 402 of the toilet 400 is opposite to the front end 401 of the toilet 400. The front end 401 of the toilet 400 refers to the part that faces the user when standing in front of the toilet 400. The back end 402 of the toilet 400 is typically positioned against a wall. The back end 472 of the toilet bowl 470 refers to the part of the bowl 470 that connects to the toilet tank and the plumbing. However, it is to be noted that the present disclosure is not limited thereto. In general, the radar device 410 may be arranged anywhere within the toilet 400 under the condition that the opening 411 of the radar device 410 is only covered by the (outer) casing 430 of the toilet 400. For example, the radar device 410 may be integrated into the toilet bowl 470 at its front end 471 (i.e., the part facing the user when standing in front of the toilet 400).

According to the present technology, the radar sensor senses the environment of the toilet substantially only through the opening (window) formed in the radar device's housing. The outer casing of the toilet may be reused as sealing surface for closing the radar device.

The examples described herein may be summarized as follows:
An example (e.g., example 1) relates to a radar device arranged to be included in a toilet. The radar device comprises a housing configured to attenuate radar waves originating from within and/or outside the housing and impinging thereupon. The housing comprises an opening formed to be covered by a casing of the toilet in a mounting position of the radar device. In addition, the radar device comprises a radar sensor arranged in the housing. A FoV of the radar sensor extends through the opening.

Another example (e.g., example 2) relates to a previous example (e.g., example 1) or to any other example, wherein a distance between the radar sensor and the opening is equal to a wavelength of radar waves emitted by the radar sensor.

Another example (e.g., example 3) relates to a previous example (e.g., one of the examples 1 or 2) or to any other example, wherein the housing comprises radiation-absorbent material for attenuating the radar waves, the radiation-absorbent material being configured to absorb radar waves emitted by the radar sensor.

Another example (e.g., example 4) relates to a previous example (e.g., example 3) or to any other example, wherein the radiation-absorbent material at least partially lines an inner surface of the housing.

Another example (e.g., example 5) relates to a previous example (e.g., example 3) or to any other example, wherein the radiation-absorbent material is integral with wall material of the housing, wherein a thickness of the wall material is n + ¼ of the radar waves' wavelength in the wall material with n being an integer equal to or greater than zero.

Another example (e.g., example 6) relates to a previous example (e.g., one of the examples 1 to 5) or to any other example, wherein the housing comprises protruding structures formed on an inner surface of the housing and protruding from said inner surface into the housing, the protruding structures being configured to cause the radar waves to undergo multiple reflections for attenuating the radar waves.

Another example (e.g., example 7) relates to a previous example (e.g., example 6) or to any other example, wherein the protruding structures exhibit a pyramidal configuration, a wedge configuration, a conic configuration, a frustum of pyramid configuration or a wedge array configuration.

Another example (e.g., example 8) relates to a previous example (e.g., one of the examples 1 to 7) or to any other example, wherein the opening is formed in a top face of the housing in the mounting position of the radar device.

An example (e.g., example 9) relates to a toilet comprising a radar device according to a previous example (e.g., one of the examples 1 to 8) or to any other example. The toilet further comprises processing circuitry configured to control one or more functions of the toilet based on radar data output by the radar sensor of the radar device. In addition, the toilet comprises a casing. The opening of the radar device is covered by the casing of the toilet.

Another example (e.g., example 10) relates to a previous example (e.g., example 9) or to any other example, wherein the casing is an outer casing of the toilet, and wherein the opening of the radar device is covered by only the outer casing of the toilet.

Another example (e.g., example 11) relates to a previous example (e.g., one of the examples 9 or 10) or to any other example, wherein the FoV of the radar sensor covers a space in front of the toilet.

Another example (e.g., example 12) relates to a previous example (e.g., one of the examples 9 to 11) or to any other example, wherein part of the casing is detachable from the toilet for accessing the radar device.

Another example (e.g., example 13) relates to a previous example (e.g., one of the examples 9 to 12) or to any other example, wherein the one or more functions of the toilet comprise one or more of opening and closing of a toilet lid of the toilet and opening and closing of a toilet seat of the toilet.

Another example (e.g., example 14) relates to a previous example (e.g., one of the examples 9 to 13) or to any other example, wherein the radar device is detachably mounted to the receiving structure.

Another example (e.g., example 15) relates to a previous example (e.g., one of the examples 9 to 14) or to any other example, wherein the radar device is arranged between a back end of a toilet bowl of the toilet and a back end of the toilet.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A radar device (100, 200, 300) arranged to be included in a toilet, the radar device (100, 200, 300) comprising:
a housing (110) configured to attenuate radar waves originating from within and/or outside the housing (110) and impinging thereupon, wherein the housing (110) comprises an opening (111) formed to be covered by a casing of the toilet in a mounting position of the radar device (100, 200, 300); and
a radar sensor (120) arranged in the housing (110), wherein a Field-of-View, FoV, of the radar sensor (120) extends through the opening (111).

2. The radar device (100, 200, 300) of claim 1, wherein a distance between the radar sensor (120) and the opening (111) is equal to a wavelength of radar waves emitted by the radar sensor (120).

3. The radar device (100, 200, 300) of claim 1 or claim 2, wherein the housing (110) comprises radiation-absorbent material for attenuating the radar waves, the radiation-absorbent material being configured to absorb radar waves emitted by the radar sensor (120).

4. The radar device (100, 200, 300) of claim 3, wherein the radiation-absorbent material at least partially lines an inner surface of the housing (110).

5. The radar device (100, 200, 300) of claim 3, wherein the radiation-absorbent material is integral with wall material of the housing (110), wherein a thickness of the wall material is n + ¼ of the radar waves' wavelength in the wall material with n being an integer equal to or greater than zero.

6. The radar device (200, 300) of any one of claims 1 to 5, wherein the housing (110) comprises protruding structures (113, 114) formed on an inner surface of the housing (110) and protruding from said inner surface into the housing (110), the protruding structures (113, 114) being configured to cause the radar waves to undergo multiple reflections for attenuating the radar waves.

7. The radar device (200, 300) of claim 6, wherein the protruding structures (113, 114) exhibit a pyramidal configuration, a wedge configuration, a conic configuration, a frustum of pyramid configuration or a wedge array configuration.

8. The radar device (100, 200, 300) of any one of claims 1 to 7, wherein the opening (111) is formed in a top face of the housing (110) in the mounting position of the radar device (100, 200, 300).

9. A toilet (400) comprising:
a radar device (410) according to any one of claims 1 to 8;
processing circuitry (440) configured to control one or more functions of the toilet (400) based on radar data output by the radar sensor (412) of the radar device (410); and
a casing (430),
wherein the opening (411) of the radar device (410) is covered by the casing (430) of the toilet (400).

10. The toilet (400) of claim 9, wherein the casing (430) is an outer casing of the toilet (400), and wherein the opening (411) of the radar device (410) is covered by only the outer casing (430) of the toilet (400).

11. The toilet (400) of claim 9 or claim 10, wherein the FoV of the radar sensor covers a space in front of the toilet (400).

12. The toilet (400) of any one of claims 9 to 11, wherein part of the casing (430) is detachable from the toilet (400) for accessing the radar device (410).

13. The toilet (400) of any one of claims 9 to 12, wherein the one or more functions of the toilet (400) comprise one or more of opening and closing of a toilet lid (450) of the toilet (400) and opening and closing of a toilet seat (460) of the toilet (400).

14. The toilet (400) of any one of claims 9 to 13, wherein the radar device (410) is detachably mounted to the receiving structure (420).

15. The toilet (400) of any one of claims 9 to 14, wherein the radar device (410) is arranged between a back end of a toilet bowl 470 of the toilet (400) and a back end of the toilet (400).

## Amended claims

### Amended claims in accordance with Rule 137(2) EPC.

1. A radar device (100, 200, 300) arranged to be included in a toilet, the radar device (100, 200, 300) comprising:
a housing (110) configured to attenuate radar waves originating from within and/or outside the housing (110) and impinging thereupon, wherein the housing (110) comprises an opening (111) formed to be covered by a casing of the toilet in a mounting position of the radar device (100, 200, 300), wherein the housing (110) comprises radiation-absorbent material for attenuating the radar waves, the radiation-absorbent material being configured to absorb radar waves emitted by the radar sensor (120); and
a radar sensor (120) arranged in the housing (110), wherein a Field-of-View, FoV, of the radar sensor (120) extends through the opening (111).

2. The radar device (100, 200, 300) of claim 1, wherein a distance between the radar sensor (120) and the opening (111) is equal to a wavelength of radar waves emitted by the radar sensor (120).

3. The radar device (100, 200, 300) of claim 1 or claim 2, wherein the radiation-absorbent material at least partially lines an inner surface of the housing (110).

4. The radar device (100, 200, 300) of claim 1 or claim 2, wherein the radiation-absorbent material is integral with wall material of the housing (110), wherein a thickness of the wall material is n + ¼ of the radar waves' wavelength in the wall material with n being an integer equal to or greater than zero.

5. The radar device (200, 300) of any one of claims 1 to 4, wherein the housing (110) comprises protruding structures (113, 114) formed on an inner surface of the housing (110) and protruding from said inner surface into the housing (110), the protruding structures (113, 114) being configured to cause the radar waves to undergo multiple reflections for attenuating the radar waves.

6. The radar device (200, 300) of claim 5, wherein the protruding structures (113, 114) exhibit a pyramidal configuration, a wedge configuration, a conic configuration, a frustum of pyramid configuration or a wedge array configuration.

7. The radar device (100, 200, 300) of any one of claims 1 to 6, wherein the opening (111) is formed in a top face of the housing (110) in the mounting position of the radar device (100, 200, 300).

8. A toilet (400) comprising:
a radar device (410) according to any one of claims 1 to 7;
processing circuitry (440) configured to control one or more functions of the toilet (400) based on radar data output by the radar sensor (412) of the radar device (410); and
a casing (430),
wherein the opening (411) of the radar device (410) is covered by the casing (430) of the toilet (400).

9. The toilet (400) of claim 8, wherein the casing (430) is an outer casing of the toilet (400), and wherein the opening (411) of the radar device (410) is covered by only the outer casing (430) of the toilet (400).

10. The toilet (400) of claim 8 or claim 9, wherein the FoV of the radar sensor covers a space in front of the toilet (400).

11. The toilet (400) of any one of claims 8 to 10, wherein part of the casing (430) is detachable from the toilet (400) for accessing the radar device (410).

12. The toilet (400) of any one of claims 8 to 11, wherein the one or more functions of the toilet (400) comprise one or more of opening and closing of a toilet lid (450) of the toilet (400) and opening and closing of a toilet seat (460) of the toilet (400).

13. The toilet (400) of any one of claims 8 to 12, wherein the radar device (410) is detachably mounted to a receiving structure (420) of the toilet (400).

14. The toilet (400) of any one of claims 8 to 13, wherein the radar device (410) is arranged between a back end of a toilet bowl (470) of the toilet (400) and a back end of the toilet (400).
